# EUROPÄISCHE PATENTANMELDUNG

(11) **EP 2 363 379 A1**
(43) Veröffentlichungstag der Anmeldung: **07.09.2011**
(21) Anmeldenummer: 11156904.2
(22) Anmeldetag: 04.03.2011
(51) Int. Cl.: C02F 1/28, C09K 3/32, E02B 15/04, B01J 20/20, C02F 1/68, B01D 17/02, B01J 20/28

(54) **Vorrichtung zur Aufnahme und/oder Eingrenzung von in Wasser lebenden Mikroorganismen bzw. von nicht mit Wasser mischbaren Flüssigkeiten**

(30) Priorität: 05.03.2010 DE 202010003238 U; 09.09.2010 DE 202010012376 U
(71) Anmelder: EST GmbH, 50321 Brühl (DE)
(72) Erfinder: Harberink, Bernhard, 50321 Brül (DE)
(74) Vertreter: Paul, Dieter-Alfred

(57) **Zusammenfassung**

Die vorliegende Erfindung betrifft eine Vorrichtung (1) zur Aufnahme und/ oder Eingrenzung
(a) von in Wasser lebenden Mikroorganismen wie Bakterien, Algen und dergleichen, insbesondere Blaualgen, bevorzugt von Wasseroberflächen, und/ oder
(b) von nicht mit Wasser mischbaren Flüssigkeiten wie Erdölen, synthetischen Ölen, Schmierstoffen, Brennstoffen, Mineralölen, Kohlenwasserstoffen oder Kohlenwasserstoffgemischen, bevorzugt von Wasseroberflächen oder von Oberflächen fester Böden,

umfassend ein Braunkohle enthaltendes Bindemittel, welches in einer Umhüllung (2) aus einem für hydrophile Flüssigkeiten und das Bindemittel undurchlässigen Material angeordnet ist gelöst, wobei das Bindemittel Braunkohlenkoks enthält.

## Beschreibung

Die vorliegende Erfindung betrifft eine Vorrichtung zur Aufnahme und/ oder Eingrenzung
(a) von in Wasser lebenden Mikroorganismen wie Bakterien, Algen und dergleichen, insbesondere Blaualgen, bevorzugt von Wasseroberflächen, und/ oder
(b) von nicht mit Wasser mischbaren Flüssigkeiten wie Erdölen, synthetischen Ölen, Schmierstoffen, Brennstoffen, Mineralölen, Kohlenwasserstoffen oder Kohlenwasserstoffgemischen, bevorzugt von Wasseroberflächen oder von Oberflächen fester Böden.

Die Belastung von Gewässern durch Mikroorganismen stellt ein stetig steigendes Problem dar. Dies ist insbesondere dann der Fall, wenn einzelne Mikroorganismenarten oder auch nur eine Art durch menschlichen Eingriff eine Überpopulation entwickelt. Die Folge hiervon ist häufig, dass das biologische Gleichgewicht der betroffenen Gewässer derart gestört wird, dass andere Arten von Mikroorganismen verdrängt werden. Dies kann sogar dazu führen, dass höhere Lebewesen wie Fische und im Wasser lebende Säugetiere oder Vögel in großer Anzahl absterben.

Doch auch der Mensch kann hiervon unmittelbar in Mitleidenschaft gezogen werden. Bekannt ist beispielsweise die in Sommern häufiger auftretende "Algenblüte" der so genannten Blaualge, auch Cyanobakterium genannt, beispielsweise in der Ostsee. Diese wird durch Überdüngung landwirtschaftlicher Nutzflächen und von diesen Flächen in Flüsse gespülte Düngemittel hervorgerufen, welche aus den Flüssen ins Meer gelangen. Der Algenteppich der Blaualge, welche im eigentlichen Sinne keine Alge sondern ein Bakterium darstellt, kann dabei teilweise Ausmaße der Fläche der Bundesrepublik Deutschland annehmen. Kommen Menschen in Kontakt mit Blaualgen, können Hautreizungen auftreten, beim Verschlucken des Wassers sogar ernsthafte Erkrankungen im Magen-Darm Bereich.

Die Blaualge schädigt zudem das Ökosystem in erheblichem Maße, da das Bakterium wegen der effizienteren Photosynthese das gesamte Sonnenlicht absorbiert, so dass Wasseralgen oder andere Pflanzen nicht mehr ausreichend Licht erhalten und absterben. Viele Cyanobakterienstämme betreiben zudem Stickstofffixierung, bei der sie aus elementarem Luftstickstoff Ammonium bilden, was schädlich für Wasserlebewesen ist.

Außerdem ist von einigen Blaualgenarten bekannt, dass sie Toxine produzieren, insbesondere Neurotoxoine wie beispielsweise die giftige Aminosäure β-Methylamino-alanin (BMMA), welche von Fischen und Muscheln aufgenommen und so in die menschliche Nahrungskette gelangen kann, wo es zu tödlichen Vergiftungen kommen kann.

Aufgrund dieser Probleme besteht ein erheblicher Wunsch, beispielsweise Naturschutzgebiete oder auch Badestrände vor dem Eindringen solchen Mikroorganismen zu schützen. Zu diesem Zweck existieren bislang keine zufriedenstellenden Maßnahmen.

Unabhängig von diesen bakteriellen Belastungen richtet ausgelaufenes Öl auf Gewässern und Meeren, beispielsweise durch eine Schiffshavarie verursacht, regelmäßig große Schäden an der Natur an. Der hohe Kostendruck in der Transportschifffahrt und der zunehmendes Schiffsverkehr hat in jüngerer Vergangenheit die Anzahl an derartigen Unfällen trotz hoher Sicherheitsauflagen steigen lassen. Wegen Zeitdruck und hoher Entsorgungskosten wird Öl auch teilweise auf hoher See von Schiffen abgelassen.

Es zeigt sich bei Ölhavarien im Wasser immer wieder, wie schwierig und uneffektiv die Bekämpfung von Ölschäden mit derzeitigen Technologien ist. Trotz der hohen finanziellen Mittel, die in einem solchen Fall zur Verfügung gestellt werden, gibt es bis heute keine wirksamen Methoden der Ölschadensbekämpfung, welche auch bei schlechten Witterungsbedingungen und insbesondere bei Strömungen eingesetzt werden können. So ist die Aufnahme ölhaltiger Flüssigkeiten auf Gewässern mittels loser Ölbinder kaum möglich, was durch die Schwierigkeiten beim Ausbringen und die Wiederaufnahme des Materials bedingt ist. Zusätzlich erschwert wird dies durch frühzeitiges Absinken des Ölbinders nach der Ölaufnahme und durch die verminderte Ölaufnahmefähigkeit solcher losen Ölbinder nach Kontakt mit Wasser.

Aus diesem Grund wurden Ölbindematten entwickelt, in denen das eigentliche Ölauffangmittel enthalten ist. Aufnahmevorrichtungen dieser Art sind beispielsweise aus der DE 102 44 122 C1 bekannt. Dort ist eine Ölauffangmatte beschrieben, welche aus einer gewebten Baumwollumhüllung und einem darin enthaltenen Bindemittel besteht. Die gewebte Baumwollumhüllung ist mit einer wasserabweisenden aber öldurchlässigen Beschichtung aus fluorfreien Silikonverbindungen ausgerüstet. Das Bindemittel besteht aus einer Mischung von Braunkohlengranulat und Baumrindengranulat. Die Aufnahmekapazität dieser Ölauffangmatten ist mit 0,15 bis 0,75 Liter Heizöl pro Liter Bindemittel angegeben.

Um den beiden genannten Verschmutzungsproblemen entgegen treten zu können müssen bislang verschiedene Maßnahmen ergriffen werden, wofür bislang unterschiedliche, auf den jeweiligen Anwendungsfall spezialisierte Vorrichtungen in erheblicher Stückzahl benötigt und vorgehalten werden müssen. Dafür sind erhebliche Lagerkapazitäten erforderlich.

Die der vorliegenden Erfindung zugrundeliegende Aufgabe besteht darin, eine Vorrichtung zu schaffen, mit welcher einerseits Mikroorganismen auf dem Wasser eingegrenzt oder hieraus aufgenommen werden können und so deren unkontrollierte Verbreitung eingedämmt wird. Andererseits soll sich die Vorrichtung auch zur Aufnahme nicht mit Wasser mischbarer Flüssigkeiten eignen und gegenüber den bekannten Vorrichtungen eine gesteigerte selektive Ölaufnahmekapazität besitzen wobei die gleichzeitige Aufnahme von Wasser durch das Bindemittel weitestgehend zu vermeiden ist.

Diese Aufgabe wird gelöst durch eine Vorrichtung zur Aufnahme und/ oder Eingrenzung
(a) von in Wasser lebenden Mikroorganismen wie Bakterien, Algen und dergleichen, insbesondere Blaualgen, bevorzugt an Wasseroberflächen, und/ oder
(b) von nicht mit Wasser mischbaren Flüssigkeiten wie Erdölen, synthetischen Ölen, Schmierstoffen, Brennstoffen, Mineralölen, Kohlenwasserstoffen oder Kohlenwasserstoffgemischen, bevorzugt von Wasseroberflächen oder von Oberflächen fester Böden,
umfassend ein Braunkohle enthaltendes Bindemittel, welches in einer Umhüllung aus einem für hydrophile Flüssigkeiten und das Bindemittel undurchlässigen Material angeordnet ist, wobei das Bindemittel Braunkohlenkoks enthält.

Überraschenderweise hat sich bei Versuchen, die zu der vorliegenden Erfindung geführt haben, gezeigt, dass solche Vorrichtungen als Barrieren für Mikroorganismen dienen können, insbesondere für solche Mikroorganismen, die an der Wasseroberfläche oder zumindest oberflächennah leben. Dies ist vor allem bei vielen Stämmen der Blaualge der Fall, welche unmittelbar an der Wasseroberfläche einen fast lichtundurchlässigen Film bilden können, wohingegen das darunter befindliche Wasser häufig klar ist. Die erfindungsgemäßen Vorrichtungen sind schwimmfähig und bilden somit auch bei leichtem Wellengang eine sichere mechanische Barriere für diese Mikroorganismen.

Es hat sich weiterhin herausgestellt, dass die erfindungsgemäße Vorrichtung nicht nur als mechanische Barriere fungiert, sondern die Mikroorganismen auch absorbiert, was nach bisherigen Erkenntnissen in erster Linie der Füllung aus Braunkohlenkoks zugerechnet wird.

Zudem hat sich bei Versuchen, die zu der vorliegenden Erfindung geführt haben, gezeigt, dass durch zumindest teilweisen Ersatz der bislang eingesetzten Braunkohlengranulate durch Braunkohlenkoks die Ölaufnahmekapazität solcher Vorrichtungen - bei Verwendung als Ölbindematte - deutlich gesteigert werden kann. So können bei Verwendung von Braunkohlenkoks als alleinigem Bindemittel bis nahezu 1 Liter Öl pro Liter verwendetes Bindemittel aufgenommen werden. Bei dem im Stand der Technik verwendeten Braunkohlengranulat beträgt die Aufnahmekapazität hingegen nur maximal 0,75 Liter Öl pro Liter verwendetes Bindemittel.

Die erfindungsgemäße Vorrichtung kann also zwei Aufgaben erfüllen, nämlich die Eindämmung beziehungsweise Aufnahme von Mikroorganismen sowie von nicht mit Wasser mischbaren Flüssigkeiten.

Die erfindungsgemäßen Vorrichtungen können beispielsweise als Ölbindematte zur Aufnahme von Öl auf Meeren oder Binnengewässern verwendet werden. Doch auch als Präventivmaßnahme können diese Matten verwendet werden, in dem sie unter Fahrzeuge gelegt werden, um austretendes Öl aufzufangen und zu absorbieren, bevor dieses ins Erdreich gelangt. Bislang werden hierfür zumeist Ölwannen verwendet, die sich jedoch für den Außeneinsatz nur bedingt eignen, da sie sich leicht mit Niederschlagswasser füllen und damit in ihrer Funktion beeinträchtigt werden. Außerdem behindern die festen Wannen die Fahrzeuge beim Rangieren und können leicht umgestoßen werden. Demgegenüber sind die erfindungsgemäßen Ölbindematten durch die wasserundurchlässige Umhüllung unempfindlich gegenüber Niederschlagswasser. Sie können ferner durch Anpassung der Umhüllung so stabil ausgelegt werden, dass sie selbst beim Überfahren nicht zerstört werden, so dass ein Rangieren der Fahrzeuge weitestgehend ungehindert möglich ist.

Die erfindungsgemäße Vorrichtung zeichnet sich zudem dadurch aus, dass sie leicht auf der Wasseroberfläche ausgebracht werden kann. So kann sie beispielsweise unmittelbar von Schiffen während langsamer Fahrt ins Wasser abgelassen werden. Ebenso leicht können die Matten wieder aus dem Wasser aufgenommen werden, was auch maschinell unterstützt vollzogen werden kann, so dass eine Kontamination des Bedienpersonals mit den anhaftenden Mikroorganismen beziehungsweise Öl weitestgehend verhindert wird.

Aufgrund der hohen Ölaufnahmekapazität des eingesetzten Braunkohlenkokses können die erfindungsgemäßen Vorrichtungen bzw. Ölbindematten nach erfolgter Verwendung ohne weiteres der Verbrennung zugeführt werden. Da der Hauptbestandteil in mit Öl vollgesogenem Braunkohlenkoks besteht, besitzen diese Matten einen sehr hohen Brennwert. Natürlich können auch die mit Mikroorganismen beladenen Matten der Verbrennung zugeführt werden.

Ein weiterer Vorteil der erfindungsgemäßen Vorrichtung besteht darin, dass diese wegen der geringen Dichte des Bindemittels auf Wasser schwimmfähig bleibt. Die wasserundurchlässige Umhüllung verhindert außerdem ein Vollsaugen des Bindemittels mit Wasser und stellt somit die Aufrechterhaltung der Schwimmfähigkeit sicher. Der erfindungsgemäß als Bindemittelbestandteil eingesetzte Braunkohlenkoks hat außerdem die Eigenschaft, aufgenommene Mikroorganismen beziehungsweise nicht mit Wasser mischbare Flüssigkeiten auch bei Druckbelastung zu halten, so dass ein Herauspressen der aufgenommenen Substanz beim Einsammeln der Vorrichtung vom Wasser beispielsweise durch Aufrollen nicht befürchtet werden muss.

Aufgrund der besonders guten Aufnahmeeigenschaften des erfindungsgemäß verwendeten Braunkohlenkokses für Mikroorganismnen beziehungsweise für nicht mit Wasser mischbare Flüssigkeiten besteht nach einer ersten bevorzugten Ausführungsform das Bindemittel zu wenigstens 50 Gew.-%, vorzugsweise zu wenigstens 80 Gew.-%, besonders bevorzugt vollständig aus Braunkohlenkoks. Bei ausschließlicher Verwendung von Braunkohlenkoks als Bindemittel können Ölaufnahmen aus Wasser in Größenordnungen von 0,3 bis nahezu 1 Liter Öl pro Liter Bindemittel erzielt werden.

In Weiterbildung der erfindungsgemäßen Vorrichtung kann vorgesehen sein, dass der Braunkohlenkoks einen Teilchendurchmesser von bis zu 5 mm aufweist, wobei insbesondere mehr als 85 Gew.-%, bevorzugt mehr als 90 Gew.-% der Braunkohlenkoks-Teilchen einen Durchmesser von 1,0 bis 4,0 mm aufweist. Die Verwendung von Braunkohlenkoks in den angegebenen Teilchendurchmessern ist von Vorteil, da solcher Koks rieselfähig ist und deshalb leicht in die Umhüllung eingefüllt werden kann. Außerdem bleibt der Koks auch nach dem Einfüllen - vergleichbar zu Styropoorkugeln in einem Kissen - beweglich, so dass die Vorrichtungen beispielsweise in Mattenform hergestellt und aufgerollt werden können.

Der im Rahmen der vorliegenden Erfindung eingesetzte Braunkohlenkoks besitzt vorzugsweise eine spezifische Oberfläche von mehr als 200 qm/g, insbesondere vom mehr als 250 qm/g, bevorzugt von 280 qm/g oder mehr. Die spezifischen Oberflächen können hierbei über an sich bekannte Methoden ermittelt werden, beispielsweise über BET-Adsorbtionsmessungen mit Stickstoff. Die Verwendung von Braunkohlenkoks der zuvor genannten spezifischen Oberflächen liefert besonders hohe Ölaufnahmekapazitäten beziehungsweise Aufnahmekapazitäten für Mikroorganismen.

Die Schüttdichte des eingesetzten Braunkohlenkokses kann von 0,3 bis 0,7 kg/l, vorzugsweise von 0,35 bis 0,6 kg/l, insbesondere von 0,40 bis 0,50 kg/l betragen.

In weiterer Ausgestaltung der erfindungsgemäßen Vorrichtung kann das Bindemittel weitere Bestandteile aufweisen wie Braunkohle, Holzkohle, Aktivkohle, Baumrindengranulat, Holzgranulat oder -spähne, Torf, Pflanzenfasern und/oder mineralische Bindemittel, wobei das Verhältnis der verschiedenen Bestandteile des Bindemittels vorzugsweise so eingestellt ist, dass die spezifische Dichte des Bindemittels maximal 0,8 g/cm³ beträgt. Diese weiteren Bindemittel können beispielsweise einer weiteren Steigerung der Aufnahmekapazität für Mikroorganismen beziehungsweise für nicht mit Wasser mischbare Flüssigkeiten dienen und/oder die Schwimmfähigkeit der erfindungsgemäßen Vorrichtung auf Wasser verbessern. Hierzu sollte darauf geachtet werden, dass die spezifische Dichte des Bindemittels bzw. Bindemittelgemischs maximal 0,8 g/cm³ beträgt, um die schwimmfähigkeit auf Wasser zu gewährleisten. Als mineralische Bindemittel kommen beispielsweise Tonerde oder andere silikatische Materialien wie pyrogene Kieselsäure oder Fällungskieselsäure zum Einsatz.

Die Bindemittel werden insbesondere so ausgewählt, dass bei der Entsorgung der erfindungsgemäßen Vorrichtung über eine Verbrennungsanlage nach erfolgter Benutzung, d.h. im mit Mikroorganismen und/ oder mit Öl beladenen Zustand, keine unnötige zusätzliche Schadstoffbelastung durch das verwendete Bindemittel entsteht. Deshalb wird zweckmäßigerweise auf halogenierte Zusätze wie PVC und dergleichen verzichtet.

Die das Bindemittel umgebende Umhüllung kann ein- oder mehrlagig ausgebildet sein, wobei die Verwendung zwei- oder dreilagiger Umhüllungen bevorzugt ist. Die Umhüllung kann außerdem auf der Außenseite beispielsweise mit Signalfarben markiert oder auch vollständig eingefärbt werden, um eine bessere Sichtbarkeit zu gewährleisten.

Die Umhüllung kann aus gewobenem und/oder nicht gewobenem Material, wie beispielweise einem Fliesmaterial, aufgebaut sein. Außerdem können auch Gelege zum Einsatz kommen und gewünschtenfalls mit den vorgenannten Materialien in beliebiger Weise kombiniert werden.

Als Material können für die Umhüllungen natürlicher Stoffe oder Kunststoff verwendet werden, insbesondere Wolle, Baumwolle, Cellulose, Polyester, Polyethylen, Polypropylen oder andere Polyolefine, insbesondere Poly-**α**-olefine, Polyamide, Polyurethane und/oder Polycarbonate.

Eine besonders bevorzugte Umhüllung umfasst eine Mischung natürlicher und synthetischer Fasern, die einen Gehalt von 50 bis 60 Gew.-% Cellulose, 32 bis 42 Gew.-% Polypropylen und 3 bis 12 Gew.-% Polyester aufweisen, insbesondere etwa 56 Gew.-% Cellulose, etwa 37 Gew.-% Polypropylen und etwa 7 Gew.-% Polyester. Die Verwendung dieses Materials verbessert nicht nur die Aufmahmefähigkeit der Vorrichtung für Mikroorganismen beziehungsweise nicht mit Wasser mischbare Substanzen, sondern verbessert gleichfalls die Aufnahmeeigenschaften und -kapazität von ölhaltigen Verschmutzungen von der Wasseroberfläche, wofür die erfindungsgemäße Vorrichtung grundsätzlich ebenfalls eingesetzt werden kann.

In bevorzugter Ausgestaltung der erfindungsgemäßen Vorrichtung weist die Umhüllung eine hydrophobe Oberflächenmodifizierung auf, insbesondere in Form einer Silikonisierung. Bei mehrlagiger Ausgestaltung der Umhüllung befindet sich die hydrophobe Oberflächenmodifizierung vorzugsweise auf der jeweils äußeren Lage der Umhüllung, welche beim Einsatz unmittelbar mit Wasser in Berührung kommt beziehungsweise kommen kann. Es ist jedoch ebenso möglich, jede Lage der Umhüllung einzeln mit einer hydrophoben Oberflächenmodifizierung zu versehen. Die Oberflächenmodifizierung kann beispielsweise durch Tränken, Einpinseln oder Aufsprühen mit geeigneten Mitteln erzeugt werden. Es können jedoch auch Gewebe oder nicht gewobene Materialien aus bereits mit einer wasserabweisenden Oberflächenmodifizierung versehenen Fäden verwendet werden.

Besonders bevorzugte Umhüllungen zeichnen sich durch eine Kombination von gewobenen und nicht-gewobenen Lagen aus. Die gewobene Lage kann in Leinwand-, Köper- oder Atlasbindung vorliegen. Die Garndichte liegt hierbei vorzugsweise zwischen 20 und 28, bevorzugt bei 24 Kettfäden bezogen auf 16 bis 24, vorzugsweise 20 Schussfäden. Die Verwendung von Baumwolle als Gewebematerial ist hierbei besonders bevorzugt. Diese Baumwollgewebeschicht kann mit einer hydrophobierenden Beschichtung versehen sein. Das Flächengewicht der gewobenen Baumwoll-Lage liegt vorzugsweise bei 220 bis 320 g/qm, insbesondere bei 270 g/qm.

Diese Baumwollgewebelage wird weiter bevorzugt zur Ausbildung einer zweilagigen Umhüllung mit einer innenliegenden Schicht aus nicht gewobenen Polypropylenfasern kombiniert, welche ein Flächengewicht von 150 bis 250 g/qm, vorzugsweise von 200 g/qm aufweist. Die beiden Lagen können beispielsweise durch Nähen aneinander fixiert werden. Die Polypropylenfasern können insbesondere auch in den oben angegebenen Anteilen mit Cellulose- und Polyesterfasern gemischt sein.

Die Umhüllung kann insgesamt flächig oder walzenförmig ausgestaltet sein und gewünschtenfalls eine umlaufende Randverstärkung, insbesondere in Form eines umlaufenden Gewebebandes aufweisen. Beispiele für eine flächige Ausgestaltung ist die Bildung von Kissen oder Matten. Hierfür können entweder zwei gleich große Stücke von beispielsweise zweilagigem Umhüllungsmaterial deckungsgleich aufeinander gelegt werden. Alternativ wird ein Stück beispielsweise zweilagigen Umhüllungsmaterials in gewünschter Länge und doppelter Breite in der Hälfte parallel zur Längskante einmal aufeinander gefaltet. In beiden Fällen wird die Umhüllung dann an den Randseiten beispielsweise durch Vernähen bis auf eine Einfüllöffnung für das Bindemittel verschlossen, das Bindemittel eingefüllt und die Umhüllung vollständig verschlossen.

In Weiterbildung der erfindungsgemäßen Vorrichtung kann die Umhüllung wenigstens zwei miteinander verbundene oder voneinander getrennte Kammern in vorzugsweise kassettenartiger oder paralleler Anordnung aufweisen, wobei die Kammern jeweils mit dem Bindemittel befüllt sind. Die Einteilung in Kammern kann beispielsweise über das Einbringen von Trennnähten vorgenommen werden und verhindert bei der erfindungsgemäßen Vorrichtung ein zu starkes Verrutschen des Bindemittels.

Auch wenn es im Rahmen der vorliegenden Erfindung möglich ist, die erfindungsgemäße Vorrichtung mit zusätzlichen Schwimm- oder Auftriebseinrichtungen zu versehen, weist die erfindungsgemäße Vorrichtung in einer vorteilhaften Ausgestaltung derartige Einrichtungen nicht auf. Dies wird dadurch ermöglicht, dass die erfindungsgemäße Vorrichtung aufgrund ihres Aufbaus und der verwendeten Materialien ausreichende Schwimmeigenschaften besitzt.

Die Vorrichtung kann außerdem wenigstens eine Kopplungseinrichtung aufweisen, die eine ketten- und/oder flächenartige Verbindung mehrerer Vorrichtungen erlaubt, so dass beispielsweise längliche Barrieren ohne großen Aufwand erstellt werden können. Mit diesen können an der Wasseroberfläche befindliche Mikroorganismen, wie beispielsweise ein Blaualgenteppich, oder eine auf dem Wasser schwimmende nicht mit Wasser mischbare Flüssigkeit, wie beispielsweise ein Ölteppich, an der Ausbreitung gehindert und/ oder gleichzeitig aufgenommen werden.

Die Kopplungseinrichtung kann außerdem das spätere Einsammeln erleichtern. Als Kopplungseinrichtungen kommen beispielsweise Ösen zum Einsatz, die über Seile, Metall- oder Kunststoffringe mit Ösen anderer erfindungsgemäßer Vorrichtungen verbunden werden können. Auch die Verwendung von Klettverschlüssen als Kopplungseinrichtung ist möglich.

Ein weiterer Gegenstand der vorliegenden Erfindung betrifft ein Verfahren zur Aufnahme und/ oder Eingrenzung
(a) von in Wasser lebenden Mikroorganismen wie Bakterien, Algen und dergleichen, insbesondere Blaualgen, bevorzugt von Wasseroberflächen, und/ oder
(b) von nicht mit Wasser mischbaren Flüssigkeiten wie Erdölen, synthetischen Ölen, Schmierstoffen, Brennstoffen, Mineralölen, Kohlenwasserstoffen oder Kohlenwasserstoffgemischen, bevorzugt von Wasseroberflächen oder von Oberflächen fester Böden,
wobei das Verfahren die Schritte umfasst, dass zumindest eine erfindungsgemäße Vorrichtung mit der Wasseroberfläche oder der Oberfläche eines festen Bodens in Kontakt gebracht wird um die zu entfernenden Mikroorganismen und/ oder die nicht mit Wasser mischbare Flüssigkeit an die Vorrichtung zu binden und/ oder mit Hilfe der Vorrichtung an der Ausbreitung zu hindern.

Das Verfahren kann ferner den Schritt des anschließenden Einsammelns der mit Mikroorganismen und/ oder mit nicht mit Wasser mischbarer Flüssigkeit beladenen Vorrichtung umfassen.

Die vorliegende Erfindung betrifft weiterhin die Verwendung einer erfindungsgemäßen Vorrichtung zur Aufnahme und/ oder Eingrenzung
(a) von in Wasser lebenden Mikroorganismen wie Bakterien, Algen und dergleichen, insbesondere Blaualgen, bevorzugt von Wasseroberflächen, und/ oder
(b) von nicht mit Wasser mischbaren Flüssigkeiten wie Erdölen, synthetischen Ölen, Schmierstoffen, Brennstoffen, Mineralölen, Kohlenwasserstoffen oder Kohlenwasserstoffgemischen, bevorzugt von Wasseroberflächen oder von Oberflächen fester Böden.

Die vorliegende Erfindung wird im Folgenden anhand eines Ausführungsbeispiels näher erläutert.

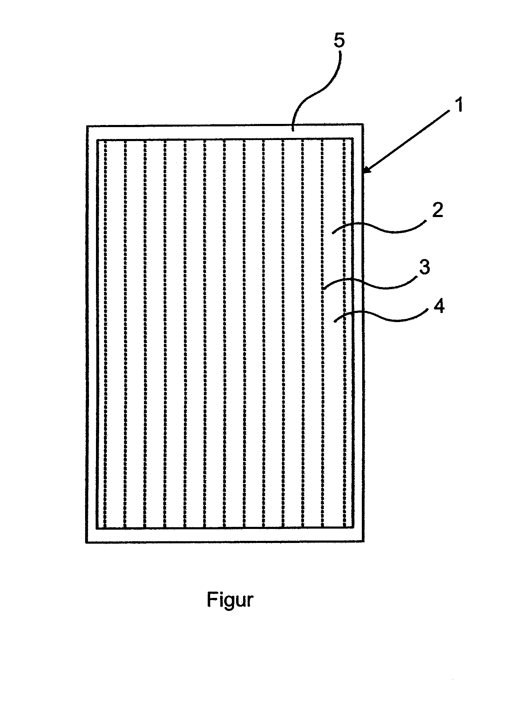

In der einzigen Figur ist eine erfindungsgemäße Vorrichtung in Form einer kombinierten Bindematte 1 dargestellt. Diese Bindematte 1 eignet sich zur Eingrenzung und auch zur Aufnahme von Mikroorganismen und nicht mit Wasser mischbaren Flüssigkeiten, insbesondere für Blaualgen und Öl. Die Bindematte 1 weist eine Umhüllung 2 auf, in der ein Bindemittel in Form von Braunkohlenkoks eingeschlossen ist, der eine Schüttdichte von 450 g/l besitzt. Die Umhüllung 2 besitzt einen zweilagigen Aufbau aus einer äußeren Gewebeschicht aus Baumwolle und einer innenliegenden Schicht aus einer nicht-gewobenen Fasermischung aus 56 Gew.-% Cellulose, 37 Gew.-% Polypropylen und 7 Gew.-% Polyester.

Das Baumwollgewebe weist ein Flächengewicht von 270 g/qm bei einer Garndichte von 24 Kettfäden auf 20 Schussfäden auf, ist gebleicht und mit einer hydrophobierenden Oberflächenbeschichtung versehen. Die innenliegende Schicht aus der Fasermischung besitzt ein Flächengewicht von 200 g/qm. Die Umhüllung 2 ist über längs verlaufende Nähte 3 in längliche Kammern 4 unterteilt, wodurch ein Verrutschen des Bindemittels, welches sich in den länglichen Kammern 4 befindet, verhindert wird. Durch die Nähte 3 sind außerdem die einzelnen Lagen der Umhüllung 2 aneinander fixiert. Die Bindematte 1 ist mit einer randseitigen umlaufenden Verstärkung aus einem Gewebeband 5 versehen.

Die in der Figur dargestellte Bindematte 1 besitzt eine Länge von 1200 mm bei einer Breite von 800 mm. Die Breite des umlaufenden Gewebebandes 5 beträgt 50 mm. Die Bindematte 1 enthält etwa 11,8 kg Braunkohlenkoks, was die Aufnahme von bis zu 25 l Öl pro Matte ermöglicht.

## Patentansprüche

1. Vorrichtung (1) zur Aufnahme und/ oder Eingrenzung
(a) von in Wasser lebenden Mikroorganismen wie Bakterien, Algen und dergleichen, insbesondere Blaualgen, bevorzugt von Wasseroberflächen, und/ oder
(b) von nicht mit Wasser mischbaren Flüssigkeiten wie Erdölen, synthetischen Ölen, Schmierstoffen, Brennstoffen, Mineralölen, Kohlenwasserstoffen oder Kohlenwasserstoffgemischen, bevorzugt von Wasseroberflächen oder von Oberflächen fester Böden,
umfassend ein Braunkohle enthaltendes Bindemittel, welches in einer Umhüllung (2) aus einem für hydrophile Flüssigkeiten und das Bindemittel undurchlässigen Material angeordnet ist, wobei das Bindemittel Braunkohlenkoks enthält.

2. Vorrichtung nach Anspruch 1, **dadurch gekennzeichnet, dass** das Bindemittel zu wenigstens 50 Gew.-%, vorzugsweise zu wenigstens 80 Gew.-%, besonders bevorzugt vollständig aus Braunkohlenkoks besteht.

3. Vorrichtung nach Anspruch 1 oder 2, **dadurch gekennzeichnet, dass** der Braunkohlenkoks einen Teilchendurchmessen von bis zu 5 mm aufweist, wobei insbesondere mehr als 85 Gew.-%, bevorzugt mehr als 90 Gew.-% der Teilchen einen Durchmesser von 1,0 bis 4,0 mm aufweist.

4. Vorrichtung nach einem der vorstehenden Ansprüche, **dadurch gekennzeichnet, dass** der Braunkohlenkoks eine spezifische Oberfläche von mehr als 200 qm/g, insbesondere von mehr als 250 qm/g, bevorzugt von 280 qm/g oder mehr aufweist.

5. Vorrichtung nach einem der vorstehenden Ansprüche, **dadurch gekennzeichnet, dass** der Braunkohlenkoks eine Schüttdichte von 0,3 bis 0,7 7 kg/l, vorzugsweise von 0,35 bis 0,6 kg/l, insbesondere von 0,40 bis 0,50 kg/l aufweist.

6. Vorrichtung nach einem der vorstehenden Ansprüche, **dadurch gekennzeichnet, dass** das Bindemittel Braunkohle, Holzkohle, Aktivkohle, Baumrindengranulat, Holzgranulat oder -späne, Torf, Pflanzenfasern und/oder mineralische Bindemittel enthält, wobei das Verhältnis der verschiedenen Bestandteile des Bindemittels vorzugsweise so eingestellt ist, dass dessen spezifische Dichte maximal 0,8 g/cm³ beträgt.

7. Vorrichtung nach einem der vorstehenden Ansprüche, **dadurch gekennzeichnet, dass** die Umhüllung (2) ein- oder mehrlagig ausgebildet ist und/ oder aus einem gewobenen und/oder nicht gewobenen Material gebildet ist.

8. Vorrichtung nach einem der vorstehenden Ansprüche, **dadurch gekennzeichnet, dass** die Umhüllung (2) aus natürlichen Stoffen oder aus Kunststoffen aufgebaut ist, die vorzugsweise ausgewählt sind aus Wolle, Baumwolle, Cellulose, Polyestern, Polyethylen, Polypropylen, Polyamiden, Polyurethanen und/oder Polycarbonaten.

9. Vorrichtung nach einem der vorstehenden Ansprüche, **dadurch gekennzeichnet, dass** die Umhüllung (2) eine Mischung natürlicher und synthetischer Fasern umfasst, die einen Gehalt von 50 bis 60 Gew.-% Cellulose, 32 bis 42 Gew.-% Polypropylen und 3 bis 12 Gew.-% Polyester aufweisen, insbesondere etwa 56 Gew.-% Cellulose, etwa 37 Gew.-% Polypropylen und etwa 7 Gew.-% Polyester.

10. Vorrichtung nach einem der vorstehenden Ansprüche, **dadurch gekennzeichnet, dass** die Umhüllung (2) eine hydrophobe Oberflächenmodifizierung besitzt, insbesondere eine Silikonisierung.

11. Vorrichtung nach einem der vorstehenden Ansprüche, **dadurch gekennzeichnet, dass** die Umhüllung (2) wenigstens zwei miteinander verbundene oder getrennte Kammern (4) in vorzugsweise kassettenartiger oder paralleler Anordnung aufweist, die mit dem Bindemittel befüllt sind und/ oder dass die Umhüllung (2) flächig oder walzenförmig ausgestaltet ist.

12. Vorrichtung nach einem der vorstehenden Ansprüche, **dadurch gekennzeichnet, dass** die Vorrichtung keine zusätzlichen Schwimm- oder Auftriebseinrichtungen und/ oder eine umlaufende Randverstärkung aufweist, insbesondere in Form eines umlaufenden Gewebebandes (5).

13. Vorrichtung nach einem der vorstehenden Ansprüche, **dadurch gekennzeichnet, dass** die Vorrichtung wenigstens eine Kopplungseinrichtung aufweist, die eine ketten- und/oder flächenartige Verbindung mehrerer Vorrichtungen erlaubt.

14. Verfahren zur Aufnahme und/ oder Eingrenzung
(a) von in Wasser lebenden Mikroorganismen wie Bakterien, Algen und dergleichen, insbesondere Blaualgen, bevorzugt von Wasseroberflächen, und/ oder
(b) von nicht mit Wasser mischbaren Flüssigkeiten wie Erdölen, synthetischen Ölen, Schmierstoffen, Brennstoffen, Mineralölen, Kohlenwasserstoffen oder Kohlenwasserstoffgemischen, bevorzugt von Wasseroberflächen oder von Oberflächen fester Böden,
wobei das Verfahren die Schritte umfasst, dass zumindest eine Vorrichtung (1) nach einem der Ansprüche 1 bis 13 mit der Wasseroberfläche oder der Oberfläche eines festen Bodens in Kontakt gebracht wird um die zu entfernenden Mikroorganismen und/ oder die nicht mit Wasser mischbare Flüssigkeit an die Vorrichtung zu binden.

15. Verwendung einer Vorrichtung (1) nach einem der Ansprüche 1 bis 13 zur Aufnahme und/ oder Eingrenzung
(a) von in Wasser lebenden Mikroorganismen wie Bakterien, Algen und dergleichen, insbesondere Blaualgen, bevorzugt von Wasseroberflächen, und/ oder
(b) von nicht mit Wasser mischbaren Flüssigkeiten wie Erdölen, synthetischen Ölen, Schmierstoffen, Brennstoffen, Mineralölen, Kohlenwasserstoffen oder Kohlenwasserstoffgemischen, bevorzugt von Wasseroberflächen oder von Oberflächen fester Böden.
